# NEUE EUROPÄISCHE PATENTSCHRIFT

(11) **EP 2 820 740 B2**
(45) Veröffentlichungstag und Bekanntmachung des Hinweises auf die Entscheidung über den Einspruch: **08.02.2023**
(45) Hinweis auf die Patenterteilung: 11.09.2019
(21) Anmeldenummer: 13713757.6
(22) Anmeldetag: 01.03.2013
(51) Int. Cl.: H02J 9/06, H01M 10/46, G05F 1/66, H01M 10/42, H02J 7/00

(54) **STEUERMODUL FÜR EINEN ELEKTRISCHEN ENERGIESPEICHER, ENERGIESPEICHEREINHEIT MIT EINEM SOLCHEN STEUERMODUL, UNTERBRECHUNGSFREIE STROMVERSORGUNGSEINRICHTUNG UND VERFAHREN ZUM BETREIBEN EINES STEUERMODULS**
CONTROL MODULE FOR AN ELECTRICAL ENERGY ACCUMULATOR, ENERGY ACCUMULATOR UNIT HAVING SUCH A CONTROL MODULE, UNINTERRUPTIBLE POWER SUPPLY UNIT AND METHOD FOR OPERATING A CONTROL MODULE
MODULE DE COMMANDE POUR ACCUMULATEUR D'ÉNERGIE ÉLECTRIQUE, UNITÉ D'ACCUMULATION D'ÉNERGIE COMPRENANT UN TEL MODULE DE COMMANDE, DISPOSITIF D'ALIMENTATION ÉLECTRIQUE SANS INTERRUPTION ET PROCÉDÉ POUR FAIRE FONCTIONNER UN MODULE DE COMMANDE

(30) Priorität: 02.03.2012 DE 102012101769
(43) Veröffentlichungstag der Anmeldung: 07.01.2015
(73) Patentinhaber: Phoenix Contact GmbH & Co. KG, 32825 Blomberg (DE)
(72) Erfinder: ZEUCH, Jochen, 32825 Blomberg (DE); HEINEMANN, Michael, 32791 Lage (DE); HENKEL, Hartmut, 32825 Blomberg (DE)
(74) Vertreter: Michalski Hüttermann & Partner Patentanwälte mbB
(86) Internationale Anmeldenummer: PCT/EP2013/054193
(87) Internationale Veröffentlichungsnummer: WO 2013/128008

(56) Entgegenhaltungen:
- DE-T2- 69 331 801
- US-A- 4 220 872
- US-A- 6 118 254
- US-A1- 2010 072 956
- "Quint-UPS/24DC/24DC/20", , 7. November 2011 (2011-11-07), XP055078689, Gefunden im Internet: URL:http://select.phoenixcontact.com/phoen ix/dwld/db_en_quint_ups_24dc_24dc_20_10465 9_en_01.pdf?cp=y&asid2=384076685083831 [gefunden am 2013-09-11]
- "Quint-UPS/24DC/24DC/20", PHOENIX CONTACT, 7 November 2011 (2011-11-07)
- ANONYMOUS: "Betriebsanleitung ?C-TEC 2403? NCPA0727G01", J. SCHNEIDER ELEKTROTECHNIK GMBH, 3 March 2008 (2008-03-03), pages 1 - 7

## Beschreibung

Die vorliegende Erfindung betrifft ein System mit einer Begrenzungseinrichtung und einem Steuermodul für einen elektrischen Energiespeicher zum Betrieb an einer Versorgungsleitung, die zum parallelen Anschluss einer Mehrzahl Verbraucher ausgeführt ist, mit einem Versorgungsanschluss zum Verbinden mit der Versorgungsleitung und einer Steuereinheit zum kontrollierten Laden und/oder Entladen eines elektrischen Energiespeichers über den Versorgungsanschluss, wobei das Steuermodul mit dem elektrischen Energiespeicher verbunden oder verbindbar ist. Weiterhin betrifft die Erfindung ein Verfahren zum Betreiben eines solchen Steuermoduls. Ebenfalls betrifft die vorliegende Erfindung eine Energiespeichereinheit mit einem elektrischen Energiespeicher und einem vorgenannten System. Des Weiteren betrifft die vorliegende Erfindung eine unterbrechungsfreie Stromversorgungseinrichtung mit einem Energiespeicher und einem vorgenannten System.

Das vorgenannte Steuermodul wird beispielsweise in Energiespeichereinheiten, die auch als komplexe Energiespeicher bezeichnet werden, verwendet, um das Laden und/oder Entladen des Energiespeichers zu steuern. Dazu umfasst das Steuermodul eine Steuereinheit, die den Energiespeicher aus der angeschlossenen Versorgungsleitung lädt und, wenn die Energiespeichereinheit wenigstens einen Verbraucher betreibt, das Entladen des Energiespeichers steuert. Die Steuereinheit führt dabei eine Begrenzung von Ein- bzw. Ausgangsgrößen durch, was abhängig von der Verwendung der Energiespeichereinheit sowie des verwendeten Energiespeichers ausgeführt sein kann. Die Ein- bzw. Ausgangsgrößen umfassen einen Strom und eine Spannung, die an dem Versorgungsanschluss des Steuermoduls anliegen. Sofern der Energiespeicher separat von dem Steuermodul ausgeführt ist, kann das Steuermodul ausgeführt sein, jeweils nur das Laden bzw. Entladen des Energiespeichers durchzuführen. Der Energiespeicher kann nach Größe und Art und abhängig von den Umweltbedingungen, insbesondere einer Umgebungstemperatur, unterschiedlich ausgeführt sein.

Eine unterbrechungsfreie Stromversorgungseinrichtung umfasst ebenfalls ein entsprechend ausgebildetes Steuermodul. Die Funktion des Steuermoduls ist im Wesentlichen wie oben für die Energiespeichereinheit beschrieben, wobei das Steuermodul ausgeführt ist, sowohl das Laden als auch das Entladen des Energiespeichers durchzuführen. Das Steuermodul ist zusätzlich ausgeführt, bei Ausfällen einer die Versorgungsleitung speisenden Energiequelle Energie aus dem Energiespeicher bereitzustellen, um den Betrieb von an die Versorgungsleitung angeschlossenen Verbrauchern zu gewährleisten. Dazu ist die Steuereinheit des Steuermoduls ausgeführt, Strom und/oder Spannung an dem Versorgungsanschluss zu überwachen und bei einem Ausfall der Energiequelle mit einer geringen Zeitverzögerung über den Versorgungsanschluss Energie aus dem Energiespeicher in die Versorgungsleitung einzuspeisen.

Um die Energiespeichereinheit möglichst universell einsetzen zu können, ist die Steuereinheit ausgeführt, den Energiespeicher mit einem relativ geringen Strom über eine lange Zeit zu laden. Weitere an der Versorgungsleitung angeschlossene Verbraucher werden dabei gleichzeitig über die Versorgungsleitung mit Energie versorgt. Durch den geringen Strom zum Laden des Energiespeichers wird verhindert, dass die die Versorgungsleitung speisende Energiequelle auch bei einer Mehrzahl parallel angeschlossener Verbraucher nicht überlastet wird, oder dass eine groß dimensionierte Energiequelle bereitgestellt werden muss, um große Ströme für das schnelle Laden des Energiespeichers bereitzustellen. Entsprechend ist beim Entladen eine Begrenzung von Strom und/oder Spannung erforderlich, um bei einer Vielzahl zu versorgender Verbraucher Schäden an dem Energiespeicher sowie dem Steuermodul zu verhindern.

In diesem Zusammenhang ist aus dem Dokument Quint-UPS/24DC/24DC/20 eine unterbrechungsfreie Spannungsversorgung USV vorbekannt. Die USV umfasst einen Eingang für eine Versorgungsspannung, einen Batterieanschluss und einen Versorgungsausgang. Eine Diode ist am Eingang verbunden, um Rückflüsse von der Batterie zu dem Eingang für die Versorgungsspannung zu verhindern. Zusätzlich umfasst die USV zwei Schalter, welche in einem Pfad von der Versorgungsspannung zu dem Versorgungsausgang bzw. zu dem Batterieanschluss angeordnet sind. Die Schalter werden über einen Mikrocontroller gesteuert. Die unterbrechungsfreie Stromversorgung gewährleistet bei einem Ausfall der Versorgungsspannung ein Umschalten auf Batteriebetrieb. Außerdem stellt die unterbrechungsfreie Spannungsversorgung eine Schnellladefunktion für die Batterie bereit.

Aufgabe der vorliegenden Erfindung ist es daher, das im Stand der Technik bekannte Steuermodul, das Verfahren, die Energiespeichereinheit und die unterbrechungsfreie Stromversorgungseinrichtung dahingehend zu verbessern, dass sie ein schnelles Laden des Energiespeichers an einer beliebigen Versorgungsleitung mit einer beliebigen Anzahl paralleler Verbraucher bei hoher Versorgungssicherheit ermöglichen. Weiterhin ist es Aufgabe der vorliegenden Erfindung, das Steuermodul, das Verfahren, die Energiespeichereinheit und die unterbrechungsfreie Stromversorgungseinrichtung dahingehend zu verbessern, dass beim Entladen eine universelle Versorgung beliebiger Verbraucher bei hoher Betriebssicherheit ermöglicht wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß wird die Aufgabe gelöst durch ein System mit einer Begrenzungseinrichtung und einem Steuermodul für einen elektrischen Energiespeicher zum Betrieb an einer Versorgungsleitung, die zum parallelen Anschluss einer Mehrzahl Verbraucher ausgeführt ist, wobei das Steuermodul mit einem Versorgungsanschluss zum Verbinden mit der Versorgungsleitung und einer Steuereinheit zum kontrollierten Laden und/oder Entladen eines elektrischen Energiespeichers über den Versorgungsanschluss ausgeführt ist, wobei das Steuermodul mit dem elektrischen Energiespeicher verbunden oder verbindbar ist, wobei das Steuermodul mit der Begrenzungseinrichtung verbindbar ist, und die Steuereinheit ausgeführt ist, bei Verbindung des Steuermoduls mit der Begrenzungseinrichtung und dem Energiespeicher eine Schnellladung und/oder eine Schnellentladung des Energiespeichers durchzuführen, dadurch gekennzeichnet, dass beim Laden eine Begrenzung des maximalen Ladestroms durch die Begrenzungseinrichtung erfolgt, um sicherzustellen, dass eine die Versorgungsleitung betreibende Energiequelle weitere an die Versorgungsleitung angeschlossene Verbraucher zuverlässig betreiben kann, und eine Stromreserve der Energiequelle zur Erhöhung des Ladestroms verwendet wird, um eine Schnellladung durchzuführen, und die Begrenzungseinrichtung ausgeführt ist, beim Entladen einen Entladestrom des Energiespeichers zu begrenzen, so dass dieser, oder das Steuermodul, durch das Entladen nicht beschädigt oder zerstört werden.

Weiterhin wird die Aufgabe gelöst durch ein Verfahren zum Betreiben eines Steuermoduls für einen elektrischen Energiespeicher an einer Versorgungsleitung, die zum parallelen Anschluss einer Mehrzahl Verbraucher ausgeführt ist, wobei das Steuermodul mit dem elektrischen Energiespeicher verbunden oder verbindbar ist, umfassend die Schritte Überprüfen einer Verbindung des Steuermoduls mit einer Begrenzungseinrichtung und Durchführen einer Schnellladung und/oder einer Schnellentladung des Energiespeichers bei Verbindung des Steuermoduls mit der Begrenzungseinrichtung.

Ebenfalls wird die Aufgabe gelöst durch eine Energiespeichereinheit mit einem Energiespeicher und einem vorgenannten System.

Des Weiteren wird die Aufgabe gelöst durch eine unterbrechungsfreie Stromversorgungseinrichtung mit einem Energiespeicher und einem vorgenannten System, wobei das Steuermodul zum Laden und Entladen des Energiespeichers zur unterbrechungsfreien Stromversorgung von wenigstens einem an die Versorgungsleitung angeschlossenen Verbraucher ausgeführt ist.

Grundidee der vorliegenden Erfindung ist es somit, die Steuereinheit derart auszuführen, dass sie in einem normalen Betriebsmodus ohne die Verbindung mit der Begrenzungseinrichtung wie im Stand der Technik bekannt verwendet werden kann, während die Steuereinheit bei der Verbindung des Steuermoduls mit der Begrenzungseinrichtung in einen anderen Betriebsmodus, im weiteren als Schnellmodus bezeichnet, wechselt, in dem sie eine Schnellladung und/oder eine Schnellentladung durchführt. Das Laden und Entladen ist dabei prinzipiell unabhängig voneinander, so dass das Steuermodul ausgeführt sein kann, lediglich zu laden oder zu entladen. Vorzugsweise ist das Steuermodul jedoch zum Laden und Entladen des elektrischen Energiespeichers ausgeführt. Der Energiespeicher ist entsprechend ein wiederaufladbarer Energiespeicher. Alternativ kann auch ein nicht wiederaufladbarer Energiespeicher verwendet sein, beispielsweise eine Batterie. In diesem Fall ist das Steuermodul auf die Entladefunktion begrenzt. Das Umschalten der beiden Modi kann auf verschiedene Arten durchgeführt werden. Beispielsweise kann das Steuermodul einen mechanischen oder elektrischen Schalter zum umschalten aufweise, oder die Umschaltung erfolgt durch eine Softwarekonfiguration. Das Laden bzw. Entladen erfolgt in Übereinstimmung mit dem jeweils aktuellen Betrieb des Steuermoduls und des Energiespeichers. Die Schnellladung bzw. Schnellentladung wird entsprechend nur durchgeführt, wenn der Energiespeicher zu laden ist, oder Energie daraus abgegeben werden soll. Im Übrigen wird der Energiespeicher weder geladen noch entladen. Die Begrenzungseinrichtung führt dabei eine Begrenzung von Strom und/oder Spannung an dem Versorgungsanschluss in Übereinstimmung mit dem aktuellen Betrieb des Steuermoduls bzw. des Energiespeichers durch. Beim Laden erfolgt beispielsweise eine Begrenzung des maximalen Ladestroms durch die Begrenzungseinrichtung, um zu sicherzustellen, dass eine die Versorgungsleitung betreibende Energiequelle weitere an die Versorgungsleitung angeschlossene Verbraucher zuverlässig betreiben kann. Dabei kann eine Stromreserve der Energiequelle zur Erhöhung des Ladestroms verwendet werden, um eine Schnellladung durchzuführen. Beim Entladen wirkt die Begrenzungseinrichtung beispielsweise, um einen Entladestrom des Energiespeichers zu begrenzen, so dass dieser oder das Steuermodul durch das Entladen nicht beschädigt oder zerstört werden. Auch eine Begrenzung auf minimale Strom- oder Spannungswerte kann beim Entladen des Energiespeichers über die Begrenzungseinrichtung durchgeführt werden. Bei beiden Arbeitsweisen kann es nötig sein, Parameter wie Schaltschwellen oder Schaltzeiten der Steuereinheit und des Energiespeichers aufeinander anzupassen. Die Energiequelle ist vorzugsweise als Gleichstromquelle ausgeführt.

Die Energiespeichereinheit umfasst zusätzlich zu dem Steuermodul den Energiespeicher. Der Energiespeicher kann nach Größe und Art und abhängig von den Umweltbedingungen, insbesondere einer Umgebungstemperatur, unterschiedlich ausgeführt sein. Der Energiespeicher ist vorzugsweise eine austauschbare Komponente der Energiespeichereinheit.

Eine unterbrechungsfreie Stromversorgungseinrichtung umfasst ebenfalls ein wie zuvor ausgebildetes Steuermodul, das ausgeführt ist, sowohl das Laden als auch das Entladen des Energiespeichers durchzuführen, um bei Ausfällen der die Versorgungsleitung speisenden Energiequelle Energie aus dem Energiespeicher bereitzustellen. Entsprechend ist die Steuereinheit des Steuermoduls ausgeführt, Strom und/oder Spannung an dem Versorgungsanschluss zu überwachen und beim Ausfall der Energiequelle mit einer geringen Zeitverzögerung Energie aus dem Energiespeicher über den Versorgungsanschluss in die Versorgungsleitung einzuspeisen. Der Energiespeicher und das Steuermodul sind vorzugsweise als separate Komponenten ausgeführt. Dadurch kann beispielsweise der Energiespeicher leicht ausgetauscht werden, beispielsweise bei Beschädigung oder zur Durchführung einer separaten Ladung. Alternativ können der Energiespeicher und das Steuermodul eine integrale Einheit bilden, was die Handhabung der unterbrechungsfreien Stromversorgungseinrichtung erleichtert.

In vorteilhafter Ausgestaltung der Erfindung ist vorgesehen, dass die Steuereinheit einen Schalter umfasst, der zwischen dem Versorgungsanschluss und dem Energiespeicher angeordnet ist, wobei das Steuermodul ausgeführt ist, beim Herstellen einer Verbindung des Steuermoduls mit der Begrenzungseinrichtung den Versorgungsanschluss mit dem Energiespeicher durch das Schließen des Schalters zu verbinden und beim Aufheben der Verbindung durch das Öffnen des Schalters zu trennen. Der Schalter bewirkt, dass die Steuereinheit bei Verbindung des Steuermoduls mit der Begrenzungseinrichtung im Wesentlichen funktionslos geschaltet wird, da eine direkte Verbindung von dem Versorgungsanschluss zu dem Energiespeicher hergestellt wird.

In vorteilhafter Ausgestaltung der Erfindung ist vorgesehen, dass der Schalter einen mechanischen Schalter, insbesondere ein Relais, umfasst. Dies ermöglicht ein zuverlässiges Schalten mit geringen Verlusten im Schalter. Schaltzeiten des mechanischen Schalters bzw. des Relais sind weitgehend unkritisch, da eine Umschaltung des Betriebsmodus nicht zeitkritisch ist.

In vorteilhafter Ausgestaltung der Erfindung ist vorgesehen, dass der Schalter einen Halbleiterschalter, der mit wenigstens einem Bipolartransistor, einem Feldeffekttransistor oder einem Bipolartransistor mit isolierter Gate-Elektrode ausgeführt ist, umfasst. Halbleiterschalter sind besonders klein und können mit geringen Schaltströmen betätigt werden. Bei Bedarf können kurze Schaltzeiten realisiert werden.

Gemäß einer vorteilhaften Ausgestaltung der Erfindung ist vorgesehen, dass der Schalter als unidirektionaler Schalter ausgeführt ist. Entsprechend kann der Schalter lediglich eine Schnellladung oder eine Schnellentladung ermöglichen. Die jeweils andere Funktion wird auch beim Verbinden des Steuermoduls mit der Begrenzungseinrichtung im normalen Betriebsmodus durchgeführt.

In vorteilhafter Ausgestaltung der Erfindung ist vorgesehen, dass der Energiespeicher einen chemischen Energiespeicher, insbesondere eine Bleibatterie oder einen NiMH-Akku, oder ein Kondensatormodul umfasst. Derartige Energiespeicher sind wiederaufladbar und damit sowohl für eine Energiespeichereinheit wie auch für eine unterbrechungsfreie Stromversorgungseinrichtung geeignet. Sie können abhängig von dem Verwendungszweck entsprechend ihrer Eigenschaften ausgewählt werden. Chemische Energiespeicher sind üblicherweise mit geringen Kosten verbunden und leicht zu handhaben. Alternativ oder zusätzlich kann der Energiespeicher wenigstens einen Kondensator, insbesondere einen Elektrolyt-Kondensator oder einen Doppelschichtkondensator, umfassen. Besonders bevorzugt umfasst das Kondensatormodul eine Mehrzahl derartiger Kondensatoren. Kondensatoren bzw. Kondensatormodule sind gut für eine Schnellladung bzw. - entladung geeignet, ohne dass relevante Alterungseffekte auftreten.

In weiterer vorteilhafter Ausgestaltung der Erfindung ist vorgesehen, dass das Steuermodul eine automatische Betätigungsvorrichtung umfasst, wobei eine Betätigung bei Verbindung des Steuermoduls mit der Begrenzungseinrichtung erfolgt, und die Steuereinheit ausgeführt ist, bei Betätigung der Betätigungsvorrichtung eine Schnellladung und/oder eine Schnellentladung des Energiespeichers durchzuführen. Durch die automatische Betätigung wird sichergestellt, dass das Steuermodul automatisch in den Schnellmodus wechselt, sobald die Verbindung mit der Begrenzungseinrichtung hergestellt ist. Vorzugsweise wird durch das Aufheben der Verbindung, also einer Trennung der Begrenzungseinrichtung vom dem Steuermodul, in den normalen Betriebsmodus zurückgewechselt. Die Verwendung des normalen Betriebsmodus bei Verbindung des Steuermoduls mit der Begrenzungseinrichtung wird dadurch genauso verhindert wie das Durchführen einer Schnellladung bzw. Schnellentladung ohne Begrenzungseinrichtung. Dadurch werden Schäden an dem Energiespeicher und/oder dem Steuermodul durch Fehlbedienung verhindert.

In weiterer vorteilhafter Ausgestaltung der Erfindung ist vorgesehen, dass die Betätigungsvorrichtung ein mechanisches Betätigungselement umfasst, das derart ausgeführt ist, dass es durch das Verbinden des Steuermoduls mit der Begrenzungseinrichtung mechanisch betätigt wird. Das Betätigungselement ist ausgeführt und positioniert, um durch einen korrespondierenden Aktor der Begrenzungseinrichtung mechanisch betätigt zu werden.

In weiterer vorteilhafter Ausgestaltung der Erfindung ist vorgesehen, dass die Betätigungsvorrichtung ein elektrisches Betätigungselement umfasst, das derart ausgeführt ist, dass es durch das Verbinden des Steuermoduls mit der Begrenzungseinrichtung elektrisch betätigt wird. Das elektrische Betätigungselement kann beispielsweise durch zwei Kontakte, die an einer Außenwand des Steuermoduls angeordnet sind, realisiert werden. Die Kontakte sind ausgeführt und positioniert, um durch einen korrespondierenden Aktor der Begrenzungseinrichtung elektrisch betätigt zu werden. Beispielsweise können die Kontakte beim Verbinden mit der Begrenzungseinrichtung durch diese gebrückt werden. Durch das Herstellen der leitenden Verbindung zwischen den beiden Kontakten kann das Steuermodul die Verbindung mit der Begrenzungseinrichtung erkennen und zwischen den Modi wechseln.

Gemäß einer weiteren vorteilhaften Ausgestaltung der Erfindung ist vorgesehen, dass die Betätigungsvorrichtung eine Datenschnittstelle umfasst und ausgeführt ist, von einer korrespondieren Schnittstelle der Begrenzungseinrichtung beim Verbinden des Steuermoduls mit der Begrenzungseinrichtung eine Signal über die Schnittstelle zu empfangen. Über die Datenschnittstelle kann somit das Verbinden der Begrenzungseinrichtung an das Steuermodul signalisiert werden. In vorteilhafter Weiterbildung kann die Art der Begrenzungseinrichtung signalisiert werden, so dass bei mehreren verbindbaren Begrenzungseinrichtungen nur das Verbinden mit einer geeigneten Begrenzungseinrichtung eine Betätigung auslöst.

Auch das Entfernen der Begrenzungseinrichtung kann entsprechend signalisiert werden.

Gemäß einer vorteilhaften Ausgestaltung der Erfindung ist vorgesehen, dass die Steuereinheit ausgeführt ist, eine Tiefentladung des Energiespeichers zu verhindern. Die Tiefentladung kann Schäden an dem Energiespeicher bewirken, was zu vermeiden ist. Bei Vermeidung der Tiefentladung weist der Energiespeicher eine Restenergiemenge auf, so dass das Steuermodul davon weiter gespeist werden kann. Damit kann beispielsweise bei der unterbrechungsfreien Stromversorgungseinrichtung der USV-Betrieb rechtzeitig unterbrochen werden, so dass das Steuermodul weiterhin eine Signalisierung oder eine Kommunikation mit einer externen Einrichtung durchführen kann. Die Steuereinheit führt beispielsweise einen Wechsel in den normalen Betriebsmodus durch, um ein weiteres Entladen zu verhindern.

In vorteilhafter Ausgestaltung der Erfindung ist vorgesehen, dass die unterbrechungsfreie Stromversorgungseinrichtung eine Begrenzungseinrichtung umfasst, wobei die Begrenzungseinrichtung zur automatischen Betätigung der Betätigungsvorrichtung bei Verbindung mit dem Steuermodul ausgeführt ist. Dies ermöglicht, die unterbrechungsfreie Stromversorgung effizient an der Versorgungsleitung zu betreiben. Eine entsprechende Kombination mit der Begrenzungseinrichtung ist prinzipiell auch für die Energiespeichereinheit möglich.

Nachfolgend wird die Erfindung unter Bezugnahme auf die anliegende Zeichnung anhand bevorzugter Ausführungsformen näher erläutert.

Es zeigen
- Fig. 1: ein Prinzipschaltbild einer Energiespeichereinheit gemäß einer ersten Ausführungsform der Erfindung, und
- Fig. 2: ein Prinzipschaltbild einer unterbrechungsfreien Stromversorgungseinrichtung gemäß einer zweiten Ausführungsform der Erfindung.

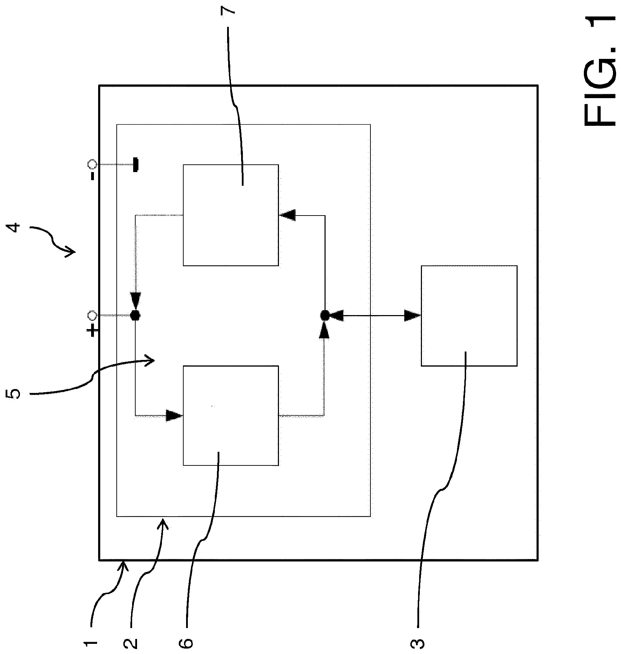

Figur 1 zeigt eine Energiespeichereinheit 1 gemäß einer ersten Ausführungsform der Erfindung. Die Energiespeichereinheit 1 umfasst ein Steuermodul 2 und einen Energiespeicher 3, der in diesem Ausführungsbeispiel als Nickel-Metallhydrid-Akkumulator ausgeführt ist. Steuermodul 2 und Energiespeicher 3 sind integraler Bestandteil der Energiespeichereinheit 1.

Das Steuermodul 2 ist zur Verbindung an einer hier nicht gezeigten Versorgungsleitung zum parallelen Anschluss einer Mehrzahl nicht dargestellter Verbraucher ausgeführt. Das Steuermodul 2 umfasst einen Versorgungsanschluss 4 zum Verbinden mit der Versorgungsleitung. Weiterhin umfasst das Steuermodul 2 eine Steuereinheit 5 mit einer Ladeeinheit 6 und einer Entladeeinheit 7, die in diesem Ausführungsbeispiel separat ausgeführt sind. Die Ladeeinheit 6 ist zum kontrollierten Laden des elektrischen Energiespeichers 3 über den Versorgungsanschluss 4 mit einem begrenzten Strom ausgeführt. Die Entladeeinheit 7 ist zum kontrollierten Entladen des Energiespeichers 3 über den Versorgungsanschluss 4 ausgeführt.

Die Energiespeichereinheit 1 ist über das Steuermodul 2 mit einer Begrenzungseinheit verbindbar. Das Steuermodul 2 umfasst eine automatische Betätigungsvorrichtung, die in der Figur 1 nicht gezeigt ist, und die an einer beliebigen Stelle eines Gehäuses der Energiespeichereinheit 1 angebracht sein kann. Die Betätigungsvorrichtung ist derart ausgeführt und angeordnet, dass bei einer Verbindung des Steuermoduls 2 mit der Begrenzungseinrichtung automatisch eine Betätigung erfolgt. Dazu umfasst die Betätigungsvorrichtung ein mechanisches Betätigungselement, das durch einen korrespondierenden Aktor der Begrenzungseinrichtung beim Verbinden automatisch betätigt wird.

Die Steuereinheit 5 ist ausgeführt, bei Betätigung der Betätigungsvorrichtung aus ihrem normalen Betriebsmodus zum kontrollierten Laden und Entladen in einen Schnellmodus zu wechseln, in dem sie eine Schnellladung und eine Schnellentladung des Energiespeichers 3 durchführt. Die Steuereinheit 5 ist weiterhin ausgeführt, eine Tiefentladung des Energiespeichers 3 zu verhindern, indem sie den Energiespeicher 3 überwacht und diesen ggf. von dem Versorgungsanschluss 4 trennt.

Das Verfahren zum Betreiben des Steuermoduls 2 sieht somit vor, dass eine Verbindung des Steuermoduls 2 mit der Begrenzungseinrichtung überprüft wird. In einem weiteren Schritt wird bei der Verbindung des Steuermoduls 2 mit der Begrenzungseinrichtung eine Schnellladung und eine Schnellentladung durchgeführt, wozu aus dem Normalmodus in den Schnellmodus gewechselt wird.

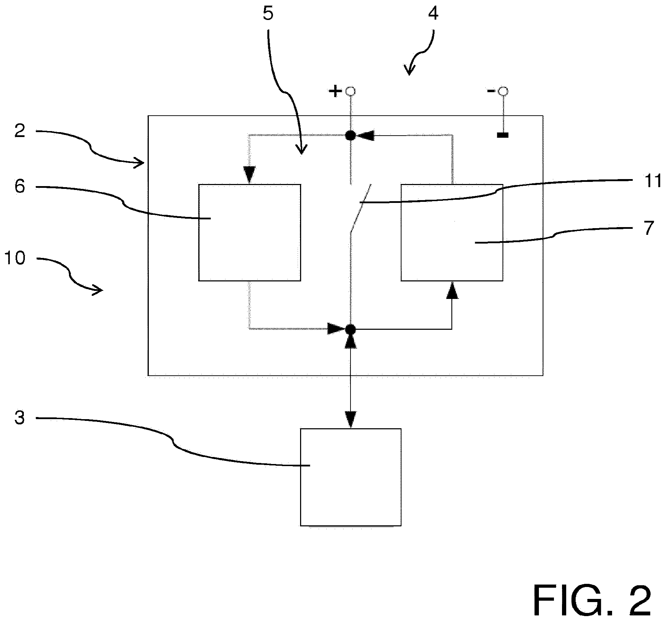

Figur 2 zeigt eine unterbrechungsfreie Stromversorgungseinrichtung 10 gemäß einer zweiten Ausführungsform der vorliegenden Erfindung. Wesentliche Elemente der unterbrechungsfreien Stromversorgungseinrichtung 10 entsprechen denen der Energiespeichereinheit 1 der ersten Ausführungsform, so dass für übereinstimmende Komponenten dieselben Bezugszeichen verwendet werden und auf eine wiederholte Beschreibung verzichtet wird.

Die unterbrechungsfreie Stromversorgungseinrichtung 10 umfasst wie die zuvor beschriebene Energiespeichereinheit 1 ein Steuermodul 2 und einen Energiespeicher 3, die miteinander verbindbar sind. Entsprechend kann ein einfacher Austausch des Energiespeichers 3 der unterbrechungsfreien Stromversorgungseinrichtung 10 durchgeführt werden. Der Energiespeicher 3 ist in diesem Ausführungsbeispiel als Bleibatterie ausgeführt.

Das Steuermodul 2 umfasst eine Steuereinheit 5 mit einer Ladeeinheit 6 und einer Entladeeinheit 7 wie zuvor unter Bezug auf die Energiespeichereinheit 1 beschrieben. Zusätzlich umfasst die Steuereinheit 5 der unterbrechungsfreien Stromversorgungseinrichtung 10 einen Schalter 11, der zwischen dem Versorgungsanschluss 4 und dem Energiespeicher 3 angeordnet ist. Der Schalter 11 ist in diesem Ausführungsbeispiel als Relais ausgeführt, welches einen bidirektionalen mechanischen Schalter darstellt. Beim Schließen des Relais 11 wird ein Stromfluss zwischen dem Energiespeicher 3 und dem Versorgungsanschluss 4 in beiden Richtungen möglich.

In einer alternativen Ausführungsform umfasst der Schalter 11 einen Halbleiterschalter, der mit wenigstens einem Bipolartransistor, einem Feldeffekttransistor oder einem am Bipolartransistor mit isolierter Gate-Elektrode (IGBT) als unidirektionaler Schalter ausgeführt ist, um lediglich eine Schnellladung des Energiespeichers 3 beim Verbinden mit der Begrenzungseinrichtung zu ermöglichen.

In Übereinstimmung mit der zuvor beschriebenen Energiespeichereinheit 1 umfasst das Steuermodul 2 der unterbrechungsfreien Stromversorgungseinrichtung 10 eine Betätigungsvorrichtung, die in diesem Ausführungsbeispiel ein elektrisches Betätigungselement umfasst. Die Betätigungsvorrichtung umfasst zwei elektrische Kontakte, die durch das Verbinden des Steuermoduls 2 mit der Begrenzungseinrichtung durch eine an der Begrenzungseinrichtung ausgebildete Brücke kurzgeschlossen werden. Hierdurch erfolgt eine Betätigung der Betätigungsvorrichtung. Durch die Betätigung schließt das Steuermodul 2 den Schalter 11, und es erfolgt ein Wechsel aus dem normalen Betriebsmodus in den Schnellmodus. Beim Aufheben der Verbindung wird entsprechend der Kurzschluss der beiden Kontakte der Betätigungsvorrichtung aufgehoben, woraufhin das Steuermodul 2 den Schalter 11 öffnet, um aus dem Schnellmodus in den normalen Betriebsmodus zu wechseln.

Die unterbrechungsfreie Stromversorgungseinrichtung 10 unterscheidet sich in ihrer Funktion von der Energiespeichereinheit 1 dadurch, dass das Steuermodul 2 zum Laden und Entladen des Energiespeichers 3 zur unterbrechungsfreien Stromversorgung von wenigstens einem an eine Versorgungsleitung angeschlossenen Verbraucher ausgeführt ist. Dies ermöglicht einen schnellen Wechsel zwischen einem Betrieb zum Laden bzw. Entladen des Energiespeichers 3, um die unterbrechungsfreie Versorgung der Verbraucher zu gewährleisten.

Das Verfahren zum Betreiben des Steuermoduls 2 in dieser Ausführungsform ist identisch zu dem zuvor beschriebenen.

In einer alternativen Ausführungsform der unterbrechungsfreien Stromversorgungseinrichtung 10 umfasst die unterbrechungsfreie Stromversorgungseinrichtung 10 die Begrenzungseinrichtung. Die Begrenzungseinrichtung ist wie zuvor beschrieben zur automatischen Betätigung der Betätigungsvorrichtung bei Verbindung mit dem Steuermodul 2 ausgeführt. Entsprechend wird die unterbrechungsfreie Stromversorgungseinrichtung 10 der alternativen Ausführungsform kontinuierlich im Schnellmodus verwendet.

**Bezugszeichenliste**

| | |
|---|---|
| Energiespeichereinheit | 1 |
| Steuermodul | 2 |
| Energiespeicher | 3 |
| Versorgungsanschluss | 4 |
| Steuereinheit | 5 |
| Ladeeinheit | 6 |
| Entladeeinheit | 7 |
| Unterbrechungsfreie Stromversorgungseinrichtung | 10 |
| Schalter, Relais | 11 |

## Patentansprüche

1. System mit einer Begrenzungseinrichtung und einem Steuermodul (2) für einen elektrischen Energiespeicher (3) zum Betrieb an einer Versorgungsleitung, die zum parallelen Anschluss einer Mehrzahl Verbraucher ausgeführt ist, wobei das Steuermodul (2) mit einem Versorgungsanschluss (4) zum Verbinden mit der Versorgungsleitung und einer Steuereinheit (5) zum kontrollierten Laden und Entladen eines elektrischen Energiespeichers (3) über den Versorgungsanschluss (4) ausgeführt ist, wobei das Steuermodul (2) mit dem elektrischen Energiespeicher (3) verbunden oder verbindbar ist, wobei das Steuermodul (2) mit der Begrenzungseinrichtung verbindbar ist, und die Steuereinheit (5) ausgeführt ist, bei Verbindung des Steuermoduls (2) mit der Begrenzungseinrichtung von einem normalen Betriebsmodus in einen Schnellmodus zu wechseln, um im Schnellmodus bei Verbindung des Steuermoduls (2) mit der Begrenzungseinrichtung und dem Energiespeicher (3) eine Schnellladung oder eine Schnellentladung des Energiespeichers (3) durchzuführen, wobei beim Laden eine Begrenzung des maximalen Ladestroms durch die Begrenzungseinrichtung erfolgt, um sicherzustellen, dass eine die Versorgungsleitung betreibende Energiequelle weitere an die Versorgungsleitung angeschlossene Verbraucher zuverlässig betreiben kann, und eine Stromreserve der Energiequelle zur Erhöhung des Ladestroms verwendet wird, um eine Schnellladung durchzuführen, und beim Entladen die Begrenzungseinrichtung ausgeführt ist, einen Entladestrom des Energiespeichers (3) zu begrenzen, so dass dieser oder das Steuermodul (2) durch das Entladen nicht beschädigt oder zerstört werden.

2. System nach Anspruch 1, **dadurch gekennzeichnet, dass**
die Steuereinheit (5) einen Schalter (11) umfasst, der zwischen dem Versorgungsanschluss (4) und dem Energiespeicher (3) angeordnet ist, wobei das Steuermodul (2) ausgeführt ist, beim Herstellen einer Verbindung des Steuermoduls (2) mit der Begrenzungseinrichtung den Versorgungsanschluss (4) mit dem Energiespeicher (3) durch das Schließen des Schalters (11) zu verbinden und beim Aufheben der Verbindung durch das Öffnen des Schalters (11) zu trennen.

3. System nach Anspruch 2,
**dadurch gekennzeichnet, dass**
der Schalter (11) einen mechanischen Schalter, insbesondere ein Relais, umfasst.

4. System nach einem der Ansprüche 2 oder 3,
**dadurch gekennzeichnet, dass**
der Schalter (11) einen Halbleiterschalter, der mit wenigstens einem Bipolartransistor, einem Feldeffekttransistor oder einem Bipolartransistor mit isolierter Gate-Elektrode ausgeführt ist, umfasst.

5. System nach Anspruch 4,
**dadurch gekennzeichnet, dass**
der Schalter (11) als unidirektionaler Schalter ausgeführt ist.

6. System nach einem der vorhergehenden Ansprüche,
**dadurch gekennzeichnet, dass**
das Steuermodul (2) eine automatische Betätigungsvorrichtung umfasst, wobei eine Betätigung bei Verbindung des Steuermoduls (2) mit der Begrenzungseinrichtung erfolgt, und die Steuereinheit (5) ausgeführt ist, bei Betätigung der Betätigungsvorrichtung eine Schnellladung und/oder eine Schnellentladung des Energiespeichers (3) durchzuführen.

7. System nach Anspruch 6,
**dadurch gekennzeichnet, dass**
die Betätigungsvorrichtung ein mechanisches Betätigungselement umfasst, das durch das Verbinden des Steuermoduls (2) mit der Begrenzungseinrichtung mechanisch betätigt wird.

8. System nach einem der Ansprüche 6 oder 7,
**dadurch gekennzeichnet, dass**
die Betätigungsvorrichtung ein elektrisches Betätigungselement umfasst, das durch das Verbinden des Steuermoduls (2) mit der Begrenzungseinrichtung elektrisch betätigt wird.

9. System nach einem der Ansprüche 6 bis 8,
**dadurch gekennzeichnet, dass**
die Betätigungsvorrichtung eine Datenschnittstelle umfasst und ausgeführt ist, von einer korrespondieren Schnittstelle der Begrenzungseinrichtung beim Verbinden des Steuermoduls (2) mit der Begrenzungseinrichtung ein Signal über die Schnittstelle zu empfangen.

10. System nach einem der vorhergehenden Ansprüche,
**dadurch gekennzeichnet, dass**
die Steuereinheit (5) ausgeführt ist, eine Tiefentladung des Energiespeichers (3) zu verhindern.

11. Verfahren zum Betreiben eines Steuermoduls (2) für einen elektrischen Energiespeicher (3) an einer Versorgungsleitung, die zum parallelen Anschluss einer Mehrzahl Verbraucher ausgeführt ist, wobei das Steuermodul (2) mit dem elektrischen Energiespeicher (3) verbunden oder verbindbar ist, umfassend die Schritte
Überprüfen einer Verbindung des Steuermoduls (2) mit einer Begrenzungseinrichtung, und
Wechsel von einem normalen Betriebsmodus in einen Schnellmodus bei Verbindung des Steuermoduls (2) mit der Begrenzungseinrichtung,
Durchführen einer Schnellladung oder einer Schnellentladung des Energiespeichers (3) bei Verbindung des Steuermoduls (2) mit der Begrenzungseinrichtung mittels einer Steuereinheit (5) des Steuermoduls (2), die zum kontrollierten Laden und Entladen des elektrischen Energiespeichers (3) über den Versorgungsanschluss (4) ausgeführt ist, wobei
beim Laden eine Begrenzung des maximalen Ladestroms durch die Begrenzungseinrichtung erfolgt, um sicherzustellen, dass eine die Versorgungsleitung betreibende Energiequelle weitere an die Versorgungsleitung angeschlossene Verbraucher zuverlässig betreiben kann, und eine Stromreserve der Energiequelle zur Erhöhung des Ladestroms verwendet wird, um eine Schnellladung durchzuführen, und
beim Entladen die Begrenzungseinrichtung wirkt, um einen Entladestrom des Energiespeichers (3) zu begrenzen, so dass dieser oder das Steuermodul (2) durch das Entladen nicht beschädigt oder zerstört werden.

12. Energiespeichereinheit (1) mit einem elektrischen Energiespeicher (3) und einem System nach einem der Ansprüche 1 bis 10.

13. Energiespeichereinheit (1) nach Anspruch 12,
**dadurch gekennzeichnet, dass**
dass der Energiespeicher (3) einen chemischen Energiespeicher, insbesondere eine Bleibatterie oder einen NiMH-Akku, oder ein Kondensatormodul umfasst.

14. Unterbrechungsfreie Stromversorgungseinrichtung (10) mit
einem Energiespeicher (3) und
einem System nach einem der Ansprüche 1 bis 10,
wobei
das Steuermodul (2) zum Laden und Entladen des Energiespeichers (3) zur unterbrechungsfreien Stromversorgung von wenigstens einem an die Versorgungsleitung angeschlossenen Verbraucher ausgeführt ist.

15. Unterbrechungsfreie Stromversorgungseinrichtung (10) nach Anspruch 14 in Verbindung mit Anspruch 7,
**dadurch gekennzeichnet, dass**
die unterbrechungsfreie Stromversorgungseinrichtung (10) eine Begrenzungseinrichtung umfasst, wobei die Begrenzungseinrichtung zur automatischen Betätigung der Betätigungsvorrichtung bei Verbindung mit dem Steuermodul (2) ausgeführt ist.

## Claims

1. A system comprising a limiting device and a control module (2) for an electric energy store (3) for operation on a supply line configured for the parallel connection of a plurality of consumers, the control module (2) comprising a supply terminal (4) for connection to the supply line and a control unit (5) for the controlled charging and discharging of an electric energy store (3) via the supply terminal (4), the control module (2) being connected or connectable to the electric energy store (3), the control module (2) being connectable to a limiting device, and the control unit (5) being configured, when the control module (2) is connected to the limiting device, to change from a normal operating mode to a fast mode in order to, in the fast mode, when the control module (2) is connected to the limiting device and the energy store (3), carry out a rapid charge or a rapid discharge of the energy store (3), wherein during charging, the maximum charging current is limited by the limiting device to ensure that an energy source operating the supply line is able to reliably operate further consumers connected to the supply line, and a current reserve of the energy source is used to increase the charging current so as to carry out a rapid charge, and the limiting device is configured, during discharging, to delimit a discharging current of the energy store (3), so that this energy store or the control module (2) is not damaged or destroyed by the discharging.

2. The system according to claim 1, **characterized in that** the control unit (5) comprises a switch (11), which is arranged between the supply terminal (4) and the energy store (3), wherein the control module (2) is configured, when a connection is being established between the control module (2) and the limiting device, to connect the supply terminal (4) to the energy store (3) by closing the switch (11), and, when the connection is being cancelled, to disconnect the supply terminal from the energy store by opening the switch (11).

3. The system according to claim 2,
**characterized in that**
the switch (11) comprises a mechanical switch, and in particular a relay.

4. The system according to any one of claims 2 or 3,
**characterized in that**
the switch (11) comprises a semiconductor switch, which is configured with at least one bipolar transistor, a field-effect transistor or bipolar transistor comprising an insulated gate electrode.

5. The system according to claim 4,
**characterized in that**
the switch (11) is configured as a unidirectional switch.

6. The system according to any one of the preceding claims,
**characterized in that**
the control module (2) comprises an automatic actuating device, wherein an actuation occurs upon connection of the control module (2) to the limiting device, and the control unit (5) is configured, upon actuation of the actuating device, to carry out a rapid charge and/or a rapid discharge of the energy store (3).

7. The system according to claim 6,
**characterized in that**
the actuating device comprises a mechanical actuating element, which mechanically actuated by the connection of the control module (2) to the limiting device.

8. The system according to any one of claims 6 or 7,
**characterized in that**
the actuating device comprises an electric actuating element, which is electrically actuated by the connection of the control module (2) to the limiting device.

9. The system according to any one of claims 6 to 8,
**characterized in that**
the actuating device comprises a data interface and is configured to receive, from a corresponding interface of the limiting device, a signal via the interface when the control module (2) is being connected to the limiting device.

10. The system according to any one of the preceding claims,
**characterized in that**
the control unit (5) is configured to prevent a deep discharge of the energy store (3).

11. A method for operating a control module (2) for an electric energy store (3) on a supply line configured for the parallel connection of a plurality of consumers, the control module (2) being connected or connectable to the electric energy store (3), comprising the following steps:
checking a connection between the control module (2) and a limiting device, and
changing from a normal operating mode to a fast mode when the control module (2) is connected to the limiting device,
carrying out a rapid charge or a rapid discharge of the energy store (3) when the control module (2) is connected to the limiting device with a control unit (5) which is configured for charging and discharging of the energy store (3) over the supply terminal (4) in a controlled way, wherein during charging, the maximum charging current is limited by the limiting device to ensure that an energy source operating the supply line is able to reliably operate further consumers connected to the supply line, and a current reserve of the energy source is used to increase the charging current so as to carry out a rapid charge, and
the limiting device is configured, during discharging, to delimit a discharging current of the energy store (3), so that this energy store or the control module (2) is not damaged or
destroyed by the discharging.

12. An energy store unit (1) comprising an electric energy store (3) and a system according to any one of claims 1 to 10.

13. The energy store unit (1) according to claim 12,
**characterized in that**
the energy store (3) comprises a chemical energy store, in particular a lead battery or a rechargeable NiMH battery, or a capacitor module.

14. An uninterruptible power supply device (10), comprising:
an energy store (3), and
a system according to any one of claims 1 to 10, wherein
the control module (2) for charging and discharging the energy store (3) is configured for the uninterrupted power supply of at least one consumer connected to the supply line.

15. The uninterruptible power supply device (10) according to claim 14 in conjunction with claim 7,
**characterized in that**
the limiting device is configured to automatically actuate the actuating device when connected to the control module (2).

## Revendications

1. Système doté d'un dispositif de limitation et d'un module de commande (12) pour un accumulateur d'énergie électrique (3) destiné au fonctionnement dans une ligne d'alimentation qui est conçue pour le raccordement en parallèle d'une multiplicité de consommateurs, où le module de commande (2) est conçu avec un raccordement d'alimentation (4) pour la connexion avec la ligne d'alimentation et une unité de commande (5) pour la charge et la décharge contrôlées d'un accumulateur d'énergie électrique (3) par le biais du raccordement d'alimentation (4), où le module de commande (2) est relié ou peut être relié avec l'accumulateur d'énergie électrique (3), où le module de commande (2) peut être relié avec le dispositif de limitation et l'unité de commande (5) est prévue pour, lors de la connexion du module de commande (2) avec le dispositif de limitation pour passer d'un mode de fonctionnement normal à un mode rapide, pour passer en mode rapide lors de la connexion du module de commande (2) avec le dispositif de limitation et l'accumulateur d'énergie (3), exécuter une recharge rapide et/ou une décharge rapide de l'accumulateur d'énergie (3), où lors de la charge, il y a une limitation du courant de charge maximal par le dispositif de limitation afin d'assurer qu'une source d'énergie faisant fonctionner la ligne d'alimentation peut faire fonctionner de manière fiable d'autres consommateurs raccordés à la ligne d'alimentation, et une réserve de courant de la source d'énergie est employée pour l'augmentation du courant de charge afin d'exécuter une charge rapide, et que le dispositif de limitation est conçu pour limiter un courant de décharge de l'accumulateur d'énergie (3) lors de la décharge de sorte que celui-ci ou le module de commande (2) ne soient pas endommagés ou détruits par la décharge.

2. Système selon la revendication 1, **caractérisé en ce que**
l'unité de commande (5) comprend un commutateur (11) qui est disposé entre le raccordement d'alimentation (4) et l'accumulateur d'énergie (3), où le module de commande (2) est conçu pour, lors de l'établissement d'une connexion du module de commande (2) avec le dispositif de limitation, relier le raccordement d'alimentation (4) avec l'accumulateur d'énergie (3) par la fermeture du commutateur (11) et lors de la suspension de la liaison, pour les séparer par l'ouverture du commutateur (11).

3. Système selon la revendication 2,
**caractérisé en ce que**
le commutateur (11) comprend un commutateur mécanique, notamment un relais.

4. Système selon la revendication 2 ou la revendication 3,
**caractérisé en ce que**
le commutateur (11) comprend un commutateur de semi-conducteur qui est conçu avec au moins un transistor bipolaire, un transistor à effet de champ ou un transistor bipolaire avec une électrode de grille isolée.

5. Système selon la revendication 4,
**caractérisé en ce que**
le commutateur (11) est conçu sous forme de commutateur unidirectionnel.

6. Système selon l'une des revendications précédentes,
**caractérisé en ce que**
le module de commande (2) comprend un dispositif d'actionnement automatique, où un actionnement lors de la connexion du module de commande (2) avec le dispositif de limitation a lieu et l'unité de commande (5) est conçue, lors de l'actionnement du dispositif d'actionnement, pour effectuer une charge rapide et/ou une décharge rapide de l'accumulateur d'énergie (3).

7. Système selon la revendication 6,
**caractérisé en ce que**
le dispositif d'actionnement comprend un élément d'actionnement mécanique qui est actionné mécaniquement par la connexion du module de commande (2) avec le dispositif de limitation.

8. Système selon la revendication 6 ou la revendication 7,
**caractérisé en ce que**
le dispositif d'actionnement comprend un élément d'actionnement électrique qui est actionné électriquement par la connexion du module de commande (2) avec le dispositif de limitation.

9. Système selon l'une des revendications 6 à 8,
**caractérisé en ce que**
le dispositif d'actionnement comprend une interface de données et est conçu pour recevoir un signal provenant d'une interface en correspondance du dispositif de limitation lors de la connexion du module de commande (2) avec le dispositif de limitation par le biais de l'interface.

10. Système selon l'une des revendications précédentes,
**caractérisé en ce que**
l'unité de commande (5) est prévue pour empêcher une décharge profonde de l'accumulateur d'énergie (3).

11. Procédé de fonctionnement d'un module de commande (2) pour un accumulateur d'énergie électrique (3) sur une ligne d'alimentation, qui est conçue pour le raccordement en parallèle d'une multiplicité de consommateurs, où le module de commande (2) est relié ou peut être relié avec l'accumulateur d'énergie électrique (3), comprenant les étapes
de vérification d'une connexion du module de commande (2) avec un dispositif de limitation, et
passer d'un mode de fonctionnement normal à un mode rapide lors de la connexion du module de commande (2) avec le dispositif de limitation,
d'exécution d'une charge rapide ou d'une décharge rapide de l'accumulateur d'énergie (3) lors de la connexion du module de commande (2) avec le dispositif de limitation, avec une unité de commande (5) du module de commande (2) qui est conçu pour charger et décharger l'accumulateur d'énergie électrique (3) de manière contrôlée via la connexion du raccordement d'alimentation (4), où
lors de la charge, il y a une limitation du courant de charge maximal par le dispositif de limitation afin d'assurer qu'une source d'énergie faisant fonctionner la ligne d'alimentation peut faire fonctionner de manière fiable d'autres consommateurs raccordés à la ligne d'alimentation, et une réserve de courant de la source d'énergie est employée pour l'augmentation du courant de charge afin d'exécuter une charge rapide, et
lors de la décharge, le dispositif de limitation est en action pour limiter un courant de décharge de l'accumulateur d'énergie (3) de sorte que celui-ci ou le module de commande (2) ne soient pas endommagés ou détruits par la décharge.

12. Unité d'accumulation d'énergie (1) dotée d'un accumulateur d'énergie électrique (3) et d'un système selon l'une des revendications 1 à 10.

13. Unité d'accumulation d'énergie (1) selon la revendication 12,
**caractérisée en ce que**
l'accumulateur d'énergie (3) comprend un accumulateur d'énergie chimique, notamment une batterie au plomb ou un accumulateur NiMH ou un module de condensateur.

14. Dispositif d'alimentation électrique (10) sans interruption doté
d'un accumulateur d'énergie, et
d'un système selon l'une des revendications 1 à 10, où
le module de commande (22) est conçu pour la charge et la décharge de l'accumulateur d'énergie (3) pour l'alimentation en courant sans interruption d'au moins un consommateur raccordé à la ligne d'alimentation.

15. Dispositif d'alimentation électrique (10) sans interruption selon la revendication 14 en relation avec la revendication 7,
**caractérisé en ce que**
le dispositif de limitation est prévu pour l'actionnement automatique du dispositif d'actionnement lors de la connexion avec le module de commande (2).
